(19) Europäisches Patentamt
European Patent Office
Office européen des brevets

(11) Veröffentlichungsnummer: **0 131 023**
**B1**

(12)
# EUROPÄISCHE PATENTSCHRIFT

(45) Veröffentlichungstag der Patentschrift: **29.10.86**

(51) Int. Cl.⁴: **C 09 D 5/44**, C 08 G 59/56, C 08 G 59/64, C 25 D 13/06

(21) Anmeldenummer: **84900386.8**

(22) Anmeldetag: **05.01.84**

(86) Internationale Anmeldenummer: **PCT/DE 84/00004**

(87) Internationale Veröffentlichungsnummer: **WO 84/02713 (19.07.84 Gazette 84/17)**

**ERRATUM**

| DIE TEXTSTELLE : / TEXT PUBLISHED : / LE PASSAGE SUIVANT : | (SEITE, SPALTE, ZEILE) / (PAGE, COLUMN, LINE) / (PAGE, COLONNE, LIGNE) | | | LAUTET BERICHTIGT: / SHOULD READ : / DEVRAIT ETRE LU : |
|---|---|---|---|---|
| ...dass die Komponente C ein lineares Polyesterpolyol ist. | 8 | 14 | 10/11 | ...dass die Komponente C ein lineares Polyetherpolyol ist. |

Tag der Entscheidung über die Berichtigung / Date of decision on rectification: / Date de décision portant sur modification: 27.01.87

Ausgabe- und Veröffentlichungstag: / Issue and publication date: / Date d'edition et de publication: 25.03.87

Patbl.Nr / EPB no: / Bull. no: 87/13

(19) Europäisches Patentamt
European Patent Office
Office européen des brevets

(11) Veröffentlichungsnummer: **0 131 023 B1**

(12) # EUROPÄISCHE PATENTSCHRIFT

(45) Veröffentlichungstag der Patentschrift: **29.10.86**

(51) Int. Cl.⁴: **C 09 D 5/44**, C 08 G 59/56, C 08 G 59/64, C 25 D 13/06

(21) Anmeldenummer: **84900386.8**

(22) Anmeldetag: **05.01.84**

(86) Internationale Anmeldenummer: **PCT/DE 84/00004**

(87) Internationale Veröffentlichungsnummer: **WO 84/02713 (19.07.84** Gazette **84/17)**

(54) **WASSERDISPERGIERBARE BINDEMITTEL FÜR KATIONISCHE ELEKTROTAUCHLACKE UND VERFAHREN ZU IHRER HERSTELLUNG.**

(30) Priorität: **10.01.83 DE 3300570**

(43) Veröffentlichungstag der Anmeldung: **16.01.85 Patentblatt 85/3**

(45) Bekanntmachung des Hinweises auf die Patenterteilung: **29.10.86 Patentblatt 86/44**

(84) Benannte Vertragsstaaten: **AT BE CH DE FR GB LI NL SE**

(56) Entgegenhaltungen:
**EP - A - 0 054 194**
**FR - A - 2 338 297**
**FR - A - 2 359 189**
**US - A - 4 260 720**

(73) Patentinhaber: **BASF Lacke + Farben Aktiengesellschaft, Max-Winkelmann-Strasse 80, D-4400 Münster (DE)**

(72) Erfinder: **GEIST, Michael, Rubensstr. 251, D-4400 Münster (DE)**
Erfinder: **OTT, Günther, von Holte Str. 101 a, D-4400 Münster-Wolbeck (DE)**
Erfinder: **SCHÖN, Georg, Schillerstr. 2, D-4416 Everswinkel (DE)**

(74) Vertreter: **Habbel, Hans-Georg, Dipl.-Ing., Postfach 3429 Am Kanonengraben 11, D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft wasserdispergierbare Bindemittel für kationische Elektrotauchlacke auf der Basis von modifizierten Epoxidharzen.

Kationische wasserdispergierbare Kunstharze als Bindemittel für Elektrotauchlacke sind bekannt. So beschreibt z.B. die De-OS 2 701 002 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

Dieses und andere bekannte Kunstharze für die kathodische Elektrotauchlackierung werden häufig für Grundierungen eingesetzt, d.h. die mit ihnen beschichteten Gegenstände erhalten eine zusätzliche Decklackschicht. Nachteilig können jedoch mit den bisher bekannten Harzen nur Beschichtungen mit relativ geringer Schichtdicke erreicht werden. So werden in der DE-OS 2 701 002 erreichbare Schichtdicken von nur 11,4-18 µm angegeben.

Wenn an eine Lackierung besonders hohe Anforderungen hinsichtlich der Korrosionsbeständigkeit und der Oberflächengüte gestellt werden, wie es z.B. bei der Lackierung von Kraftwagen und anderen hochwertigen Gütern der Fall ist, ist es daher bisher üblich, zwischen der Elektrotauchgrundierung und dem Decklack als zusätzliche Schicht einen sogenannten Füller aufzubringen. Dies ist aufwendig und kostenintensiv. Daher ist es wünschenswert, das Elektrotauchlackierverfahren so zu verbessern, dass bei diesem Verfahren grössere Schichtdicken erreicht werden können. Wie bereits oben ausgeführt, ist das mit den bisher bekannten kationischen Kunstharzen jedoch nicht möglich. Die Probleme ergeben sich daraus, dass bei einer Erhöhung der Abscheidespannung über die Durchbruchspannung hinaus Oberflächenstörungen im Film durch Aufreissen der Schicht auftreten. Die Verlängerung der Beschichtungszeit ergibt ebenfalls eine Steigerung der Schichtdicke, doch lässt sich diese Steigerung nicht beliebig fortführen, denn es besteht normalerweise aufgrund des elektrischen Widerstandes des abgeschiedenen Films eine obere Grenze der Schichtdicke, bei der auch bei noch so langem Beschichten praktisch kein Schichtstärkenzuwachs mehr erreicht wird.

Überraschenderweie wurde nun gefunden, dass bei der Elektrotauchlackierung grössere Schichtdicken erzielt werden können, wenn Bindemittel auf Basis von modifizierten Epoxidharzen verwendet werden, die aromatische und aliphatische bzw. alicyclische Gruppen in bestimmten Verhältnissen enthalten.

Der Erfindung liegt also die Aufgabe zugrunde, wasserdispergierbare Bindemittel für kationische Elektrotauchlacke anzugeben, bei deren Verwendung grössere Schichtdicken erzielt werden können.

Diese Aufgabe wird bei Bindemitteln der eingangs genannten Art erfindungsgemäss dadurch gelöst, dass sie Reaktionsprodukte von

(A) niedermolekularen, aromatische Gruppen enthaltenden Epoxidharzen mit einem Epoxidäquivalentgewicht unter 375,

(B) aliphatischen und/oder alicyclischen polyfunktionellen Alkoholen und/oder Carbonsäuren mit einem Molekulargewicht unter 350, wobei das aus (A) und (B) erhaltene Zwischenprodukt einen Gehalt an aromatischen Gruppen, berechnet als Phenylengruppe, von 10 bis 45% enthält,

(C) polyfunktionellen Alkoholen, Carbonsäuren und/oder SH-Verbindungen mit einem Molekulargewicht von 500 - 5 000 und

(D) Aminoalkoholen mit mindestens einem verkappten primären oder einem tertiären Stickstoffatom sind.

Für die Komponente A — niedermolekulare, aromatische Gruppen enthaltende Epoxidharze mit einem Epoxidäquivalentgewicht unter 375 — sind Polyepoxide geeignet. Als Polyepoxide können bei der vorliegenden Erfindung Materialien verwendet werden, die zwei oder mehr Epoxidgruppen im Molekül enthalten. Bevorzugt sind Verbindungen mit zwei Epoxidgruppen im Molekül. Die Polyepoxide haben ein relativ niedriges Molekulargewicht von höchstens 750, bevorzugt 400-500. Die Polyepoxide können zum Beispiel Polyglycidylether von Polyphenolen sein, wie Bisphenole, vorteilhaft z.B. Bisphenol A. Man kann diese Polyepoxide durch Veretherung eines Polyphenols mit einem Epihalohydrin in Gegenwart von Alkali herstellen. Beispiele für geeignete Phenolverbindungen sind Bis(4-hydroxyphenyl)-2,2-propan, 4,4'-Dihydroxybenzophenon, Bis(4-hydroxyphenyl)-1,1-ethan, Bis(4-hydroxyphenyl)-1,1-isobutan, Bis(4-hydroxy-tertiär-butylphenyl)-2,2-propan, Bis(2-hydroxynaphthylmethan, 1,5-Dihydroxynaphthalin und Hydantoinepoxide.

Eine andere geeignete Klasse von Polyepoxiden sind Polyglycidylether von phenolischen Novolakharzen.

Voreilhaft können auch Polyglycidylester von aromatischen Polycarbonsäuren verwendet werden.

Als Komponente B werden aliphatische und/oder alicyclische polyfunktionelle Alkohole oder Carbonsäuren mit einem Molekulargewicht unter 350 eingesetzt. Vorteilhaft weisen diese eine verzweigte aliphatischen Kette, insbesondere mit mindestens einer Neostruktur, auf.

Geeignete Verbindungen entsprechen der folgenden allgemeinen Formel:

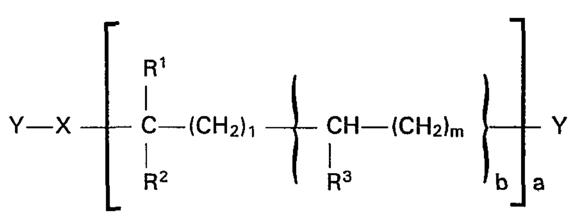

Hierin bedeuten
Y = OH, COOH
X = $(CH_2)_n$

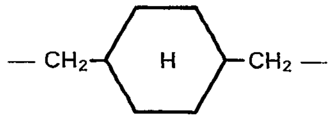

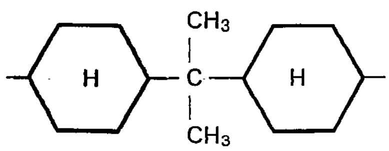

$R^1$, $R^2$, $R^3$ = H, Alkylrest mit 1 bis 5 C-Atomen

a = 0; 1
b = 0; 1
1 = 0-10
m, n = 1-10

Als Beispiele seien genannt:

Diole, wie Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl-1,3-propandiol, 2-Methyl-2-ethyl-1,3-propandiol, 2-Methyl-2-propyl-1,3-propandiol, 2-Ethyl-2-butyl-1,3-propandiol, 1,2-Butandiol, 1,4-Butandiol, 2,3-Butandiol, 2-Ethyl-1,4-butandiol, 2,2-Diethyl-1,3-butandiol, Buten-2-diol-1,4, 1,2-Pentandiol, 1,5-Pentandiol, 3-Methyl-1,5-Pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethylhydroxyacetat, 2,2-Dimethyl-3-hydroxypropyl-2,2-dimethylhydroxypropionat, 2-Methyl-2-propyl-3-hydroxy-propyl-2-methyl-2-propylhydroxypropionat, 4,4'-Methylenbiscyclohexan und 4,4'-Isopropylidenbiscyclohexanol. Einige bevorzugte Diole sind 2,2-Dimethyl-1,3-propandiol, 3-Methyl-1,5-pentandiol, 2,2-Dimethyl-3-hydroxypropyl-2,2-dimethylhydroxypropionat und 4,4'-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maleinsäure, Fumarsäure, Pimelinsäure, Korksäure, Azelainsäure, Sebazinsäure, Itakonsäure, Citrakonsäure, Mesakonsäure und Glutakonsäure.

Bevorzugt eingesetzte Dicarbonsäuren sind z.B. 2,2-Dimethylmalonsäure und Hexahydrophthalsäure.

Wesentlich ist es, dass die Verbindungen der Komponente B in einem solchen Verhältnis mit der Komponente A umgesetzt werden, dass das Umsetzungsprodukt den angegebenen Gehalt an aromatischen Gruppen, berechnet als Phenylengruppe, von 10 bis 45% aufweist.

Zur Herstellung des Reaktionsproduktes wird noch die Komponente C mitverwendet. Ihr Anteil an dem gesamten Bindemittel beträgt vorteilhafterweise 10 bis 50 Gewichtsprozent.

Die als Komponente C geeigneten polyfunktionellen Alkohole, Carbonsäuren und SH-Verbindungen haben ein Molekulargewicht von 500-5 000, bevorzugt von 530-3 000. Die bei der Erfindung in Betracht kommenden Polyole schliessen Diole und polymere Polyole wie Polyesterpolyole, Polyetherpolyole ein. Besonders bevorzugt sind polyesterpolyole und unter ihnen die Polycaprolactonpolyole.

Für die Komponente C geeignete Polyalkylenetherpolyole entsprechend der folgenden Formel:

$$H - \left[ (CHR)_n \right]_m - OH$$

in der R = Wasserstoff oder ein niedriger Alkylrest, gegebenfalls mit verschiedenen Substituenten, ist n = 2 bis 6 und m = 10 bis 50 oder noch höher ist.

Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 500 bis 2 000.

Die Polyesterpolyole können ebenfalls als polymere Polyolkomponente (Komponente C) bei der Erfindung verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Ferner lassen sich bei der Erfindung auch Polyesterpolyole, die sich von Lactonen ableiten, als Komponente C benutzen. Diese Produkte erhält man z.B. durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{\displaystyle O}{\|}}{C} - (CHR)_n - CH_2O$$

entsprechen, in der n mindestens 4, bevorzugt 4 bis 6, ist und der Substituent Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Die Polyurethanpolyole stellen eine andere Klasse von Harzen oder Polymeren dar, die als Komponente C verwendet werden können. Die Polyurethane sind bekanntlich Polyaddukte von Polyisocyanaten und einer Verbindung mit mindestens zwei reaktionsfähigen Wasserstoffatomen, dass heisst Wasserstoffatomen, die sich durch die Methode von Zerewitinoff nachweisen lassen.

Als polyfunktionelle SH-Verbindungen (Komponente C) kommen Umsetzungsprodukte von organischen Dihalogeniden mit Natriumpolysulfid in Betracht. Weitere SH-Verbindungen sind z.B. Umsetzungsprodukte von hydroxylgruppenhaltigen, linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure und ähnliche.

Für die als Komponente (D) eingesetzte Aminoalkohole, die ein verkapptes primäres Amin oder ein tertiäres Amin aufweisen, eignen sich insbesondere Di- und Trialkanolamine, die der allgemeinen Strukturformel

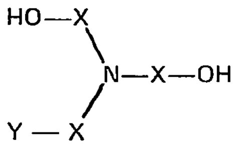

X = Alkylen, verzweigtes, ungesättigtes oder cycloaliphatisches Alkylen, Arylen
Y = OH, H

entsprechen.

Beispiele hierfür sind Methyldiethanolamin, Butyldiethanolamin, Methyldiisopropanolamin, Cyclohexyldiisopropanolamin, Triethanolamin und Triisopropanolamin.

Weitere geeignet Aminoalkohole sind Aminoalkanole, Diaminoalkanole und Polyaminoalkanole, die z.B. folgender Strukturformel entsprechen können.

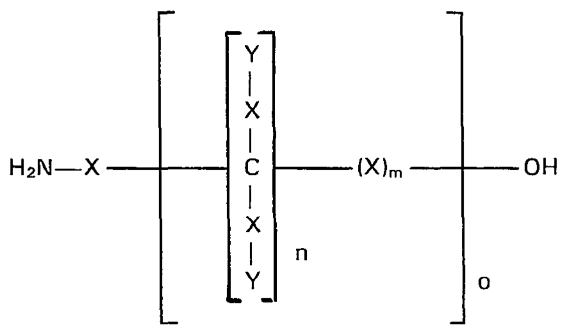

X = Alkylen, verzweigter, ungesättigtes oder cycloaliphatisches Alkylen, Arylen oder Heteroatom.
Y = H, $NH_2$
n = 0 bis 5
m = 0 bis 5
O = 0 bis 3.

Beispiele hierfür sind Monoethanolamin, 2-(2--Aminoethoxy)-ethanol, 2-Aminobutanol-1, Neopentylamin.

Zur Umsetzung eignen sich ebenfalls (N,N-Alkylaminoalkyl)alkanolamine und (N,N-Diaminoalkyl)-alkanolamine, die der allgemeinen Strukturformel

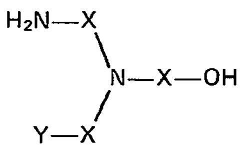

X = Alkylen, verzweigtes, ungesättigtes oder cycloaliphatisches Alkylen, Arylen
Y = $NH_2$, H

entsprechen. Beispiele hierfür sind (N,N-Methylhydroxyethyl)propandiamin-1,3, N,N,N-2-Aminoethyl-3-aminopropyl-2-hydroxyethylamin, N,N,N--Di-2-aminoethyl-2-hydroxyethylamin.

Die Aminoalkohole können einzeln oder als Mischung eingesetzt werden.

Werden Aminoalkohole mit primären Aminogruppen umgesetzt, so müssen diese Aminogruppen vor ihrer Umsetzung mit den Epoxidgruppen verkappt, das heisst z.B. in Ketimine überführt werden. Ketimine sind die Umsetzungsprodukte primärer Aminogruppen mit Ketonen. Die hierfür geeigneten Ketone entsprechen der allgemeinen Strukturformel

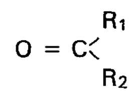

in der $R_1$ und $R_2$ organische Reste sind, die im wesentlichen inert gegenüber der Ketiminverbindung sind. Bevorzugt sind $R_1$ und $R_2$ kurze Alkylreste (2 bis 4 Kohlenstoffatome). Häufig ist es vorteilhaft, ein Keton zu verwenden, das unter oder in der Nähe des Siedepunktes von Wasser siedet oder das mit Wasser leicht überdestilliert. Die Umsetzung des Ketons mit dem primären Amin kann durch die folgende Formel erläutert werden:

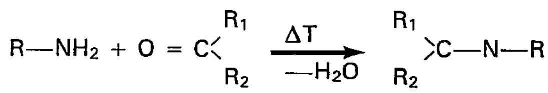


Bevorzugte Beispiele von Ketonen schliessen ein Aceton, Methylethylketon, Diethylketon, Methylpropylketon, Methylisopropylketon, Methyl-n-butylketon, Methylisobutylketon, Ethylisopropylketon, Cyclohexanon, Cyclopentanon, Acetophenon. Besonders bevorzugte Ketone sind Aceton, Methylethylketon und Methylisobutylketon.

Nach der Umsetzung sollte das erhaltene Produkt nicht Bedingungen ausgesetzt werden, bei denen die Ketimingruppe unter Bildung einer freien Amingruppe zersetzt wird, solange die Möglichkeit der Gelierung oder Vernetzung durch primäre Aminogruppen existiert. Das Ketimin zersetzt sich bei der Dispergierung in Wasser.

Zur Neutralisation der Amine geeignete Säuren, die bei der Erfindung verwendet werden können, schliessen Borsäure oder andere Säuren mit einer grösseren Dissoziationskonstante als Borsäure ein, bevorzugt organische Säuren mit einer Dissoziationskonstante von grösser als etwa $1 \times 10^{-5}$. Die bevorzugte Säure ist Essigsäure. Beispiele von anderen geeigneten Säuren sind Ameisensäure, Milchsäure, Propionsäure, Buttersäure, Salzsäure, Phosphorsäure, Schwefelsäure und Kohlensäure.

Um unter Verwendung der erfindungsgemässen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, dass es reaktive Gruppe enthält, die bei erhöhten Temperaturen eine Selbstvernetzung bewirken. Ein selbstvernetzendes System kann vorteilhaft dadurch erhalten werden, dass das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen unter Urethanbildung reagieren.

Häufig angewandte Methoden zur Vernetzung von Bindemitteln sind z.B. in folgenden Offenlegungsschriften publiziert: DE-OS 2 057 799, europäische Patentanmeldungen 12 463 und 4090 und DE-OS 2 752 256.

Wenn Vernetzungsmittel benutzt werden, machen sie in der Regel etwa 5 bis etwa 60 Gew.-% des Bindemittels aus. Bevorzugt sind etwa 20 bis etwa 40 Gew.-% des Bindemittels.

Beispiele von geeigneten Aminoplastvernetzungsmitteln sind der Hexamethylether von Hexamethylolmelamin, der Hexabutylether von Hexamehylolmelamin und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und einen Aldehyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so dass das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige für die Vernetzung geeignete organische Polyisocyanate verwendet werden.

Die Erfindung betrifft auch ein Verfahren zur Herstellung der Bindemittel, das dadurch gekennzeichnet ist, dass

(A) niedermolekulare, aromatische Gruppen enthaltende Epoxidharze mit einem Epoxidäquivalentgewicht unter unter 375 mit

(B) aliphatischen und/oder alicyclischen polyfunktionellen Alkoholen oder Carbonsäuren mit einem Molekulargewicht unter 350 unter Addition an die Epoxidgruppe darart umgesetzt werden, dass die Umsetzungsprodukte einen Anteil an aromatischen Gruppen, berechnet als Phenylengruppe, von 10 bis 45% enthalten und diese Umsetzungsprodukte mit

(C) polyfunktionellen Alkoholen, Carbonsäuren und/oder SH-Verbindungen mit einem Molekulargewicht von 500 - 5 000 sowie zur Erzielung der erforderlichen Wasserdispergierbarkeit mit

(D) Aminoalkoholen weiter modifiziert werden, wobei der Aminoalkohol mindestens ein verkapptes primäres oder ein tertiäres Stickstoffatom enthält.

Das Verfahren wird folgendermassen durchgeführt: Die Komponente A und die Komponente B werden gemischt und gegebenenfalls unter Hinzugabe von Katalysatoren, wie z.B. tertiären Aminen, bei Temperaturen zwischen 100 und 140°C, vorzugsweise 115 bis 135°C, vollständig umgesetzt. Die Umsetzung kann anhand des Epoxidäquivalentgewichtes überprüft werden. Dieses Reaktionsprodukt aus den Komponenten A und B kann gegebenenfalls mit der Komponente C bei Temperaturen zwischen 100 und 140°C weiter modifiziert werden. Auch diese Umsetzung kann anhand des Epoxidäquivalentgewichtes kontrolliert werden. Das so erhaltene Reaktionsprodukt enthält noch freie Epoxidgruppen. Für diesen Reaktionsschritt können die gleichen Katalysatoren verwendet werden wie bei der Umsetzung der Komponenten A und B. Das so erhaltene Reaktionsprodukt wird mit der Komponente D bei Temperaturen zwischen 90 und 120°C umgesetzt, so dass ein Bindemittel entsteht, das basische Aminogruppen enthält. Das basische Reaktionsprodukt kann durch Zugabe von Säuren ganz oder teilweise protonisiert werden und anschliessend in Wasser dispergiert werden. Das Vernetzungsmittel kann vor der Dispergierung in Wasser dem Bindemittel zugemischt werden oder je nach Reaktivität während der Herstellung des Bindemittels zugeführt werden. Die erhaltenen Bindemittel stellen stabile gut handhabbare Dispersionen dar. Gegebenenfalls kann es auch zweckmässig sein, vor der Dispersionsherstellung die Bindemittel in geeigneten organischen Lösungsmitteln zu lösen. Geeignete Lösungsmittel sind z.B. Glykolether, Ethylglykol, Butylglykol, Ketone, wie Ethyldiethylketon, Methylethylketon, Methylisobutylketon und andere.

Die Erfindung betrifft ferner die Verwendung der Bindemittel für Elektrotauchbäder.

Die Elektrotauchbäder können übliche Pigmente enthalten. Häufig wird den Pigmenten ein Dispergiermittel oder ein oberflächenaktives Mittel zugesetzt. Das Pigment und das gegebenenfalls verwendete oberflächenaktive Mittel werden zusammen in einem Teil des Bindemittels oder allein gemahlen, um eine Paste herzustellen, die mit dem restlichen Bindemittel zur Herstellung der Überzugsmasse verschnitten wird.

In manchen Fällen ist es vorteilhaft, dem Elektrotauchbad ein nicht ionisches Modifizierungsmittel oder Lösungsmittel zuzusetzen, um die Dispergierbarkeit, die Viskosität und/oder Filmqualität zu verbessern. Beispiele von solchen Materialien sind aliphatische, naphthenische und aromatische Kohlenwasserstoffe oder Mischungen davon; Mono- und Dialkylether von Glykolen, sibirisches Fichtennadelöl und andere Lösungsmittel, die mit dem Harzsystem veträglich sind. Das zur Zeit bevorzugte Modifizierungsmittel ist 4-Methoxy-4-methylpentanon-2.

Dem Elektrotauchband können ausserdem noch andere Zusatzstoffe, wie Antioxidantien zugesetzt werden. Beispiele dafür sind ortho-Amylphenol oder Kresol. Die Zugabe solcher Antioxidantien ist dann besonders erwünscht, wenn die Abscheidungsbäder atmosphärischem Sauerstoff bei erhöhten Temperaturen unter Rühren für längere Zeiträume ausgesetzt sind.

Andere Zusätze, die das Bad gegebenenfalls enthalten kann, sind Netzmittel, wie Erdölsulfonate, sulfatierte Fettamine oder ihre Amide, Alkylphenoxypolyethylenalkanole oder Phosphatester, einschliesslich von ethoxilierten Alkylphenolphosphaten. Andere Gruppen von möglichen Zusätzen sind Antischaummittel und Suspendiermittel. Für die Formierung des Abscheidungsbades kann normales Leitungswasser verwendet werden. Da ein derartiges Wasser aber relativ hohe Anteile an Salzen enthält, können dadurch unerwünschte Änderungen bei der elektrischen Abscheidung auftreten. Es wird deshalb im allgemeinen entionisiertes Wasser bevorzugt.

Die vorstehend aufgeführten möglichen Zusätze sind nicht vollständig, da beliebige andere Zusätze, die bei der elektrischen Abscheidung nicht stören, benutzt werden können.

Die Erfindung betrifft weiterhin ein Verfahren zum elektrophoretischen Beschichten eines elektrisch leitenden als Kathode geschalteten Substrats aus einem wässrigen Bad auf Basis mindestens teilweise mit Säuren neutralisierten kationischen Bindemittel, wobei die Bindemittel durch Umsetzung selbstvernetzbar gemacht worden sind oder das Bad ein zusätzliches Vernetzungsmittel enthält, das dadurch gekennzeichnet ist, dass die Bindemittel Reaktionsprodukte von

(A) niedermolekularen, aromatische Gruppen enthaltenden Epoxidharzen mit einem Epoxidäquivalentgewicht unter 375,

(B) aliphatischen und/oder alicyclischen polyfunktionellen Alkoholen und/oder Carbonsäuren mit einem Molekulargewicht unter 350, wobei das (A) und (B) erhaltene Zwischenprodukt einen Gehalt an aromatischen Gruppen, berechnet als Phenylengruppe, von 10 bis 45% aufweist, (C) polyfunktionellen Alkoholen, Carbonsäuren und/oder SH-Verbindungen mit einem Molekulargewicht von 500 bis 5 000 und

(D) Aminoalkoholen mit mindestens einem verkappten primären oder einem tertiären Stickstoffatom sind.

Als Substrat kann bei der elektrischen Abscheidung ein beliebiges elektrisch leitendes Substrat dienen. Üblicherweise handelt es sich dabei um Metallsubstrate, wie z.B. Eisen, Stahl, Kupfer, Zink, Messing, Zinn, Nickel, Chrom und Aluminium sowie um andere Metalle, vorbehandelte Metalle, ferner phosphatierte oder chromatierte Metalle. Auch imprägniertes Papier und andere leitende Substrate können benutzt werden.

Bei der kationischen Abscheidung werden die zu überziehenden Gegenstände in eine wässrige Dispersion des solubilisierten filmbildenden kationischen Bindemittels eingetaucht. Es wird eine elektrische Spannung zwischen dem zu überziehenden Gegenstand, der als Kathode dient, und einer Anode gelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Die Erfindung wird in den folgenden Beispielen noch näher erläutert. Alle Angaben über Teile und Prozentsätze sind Gewichtsangaben, falls nicht ausdrücklich etwas anderes festgelegt wird.

*Beispiel 1*

*Herstellung des Bindemittels I*

1002 Teile eines handelsüblichen Epoxidharzes auf der Basis Bisphenol A (Epoxidäquivalentgewicht 188), 139 Teile Neopentylglykol und 39 Teile Xylol werden in einem 4 l Reaktor vorgelegt und erhitzt. Bei 122°C werden 4 Teile Dimethylbenzylamin zugefügt. Durch die einsetzende, exotherme Reaktion steigt die Temperatur auf 133°C an. Man hält diese Temperatur, bis ein Epoxidäquivalentgewicht von 425 erreicht ist. Dann fügt man 378 Teile einer 95%igen Lösung eines Polycaprolactonpolyols (OH-Zahl 208,5) in Xylol und 3 Teile Dimethylbenzylamin zu. Man setzt die Reaktion bei 133°C fort bis ein Epoxidäquivalentgewicht von 1073 erreicht ist. Dann werden 294 Teile eines Umsetzungsproduktes aus Isopropanolamin und überschüssigem Methylisobutylketon (Aminoäquivalent des Ketimins 223) zugefügt. Man setzt die Reaktion für 3,5 Stunden bei 133°C fort und gibt dann 166 Teile Hexylglykol und 1.208 Teile des Vernetzungsmittels I zu.

Inzwischen wird aus 1.817 Teilen destilliertem Wasser, 37 Teilen Eisessig und 50 Teilen einer Emulgatorlösung ein Dispergierbad bereitet. Die Säurezahl des Bades beträgt 19,1. In dieses Bad werden nun 2.600 Teile der oben beschriebenen Harzlösung eingerührt. Nach einer Stunde fügt man weitere 1189 Teile destilliertes Wasser zu, die man 15 Minuten untermischt. Danach wird die Dispersion filtriert. Die Dispersion weist folgende Kenndaten auf:

| | |
|---|---|
| Festkörper | 34,7% |
| pH-Wert | 7,05 |
| THF-Löslichkeit | klar |
| MEQ-Base | 0,539 |
| MEQ-Säure | 0,375 |

*Beispiel 2*

*Herstellung des Bindemittels II*

1074 Teile eines handelsüblichen Epoxidharzes auf der Basis von Bisphenol A (Epoxidäquivalentgewicht 188), 149 Teile Neopentylglykol und 42 Teile Xylol werden in einem 4 l Reaktor vorgelegt und auf 130°C erhitzt. Bei 125°C gibt man 4 Teile Dimethylbenzylamin zu. Man hält die Reaktion bei 130°C bis ein Epoxidäquivalentgewicht von 428 erreicht ist. Dann gibt man 404 Teile einer 95%igen Lösung eines Polycaprolactonpolyols (OH-Zahl 208,5) in Xylol und weitere 3 Teile Dimethylbenzylamin zu. Man setzt die Reaktion bei der angegebenen Temperatur fort, bis ein Epoxidäquivalentgewicht von 1061 erreicht ist. Dann werden 316 Teile eines Umsetzungsproduktes aus Isopropanolamin und überschüssigem Methylisobutylketon (Aminäquivalent 223) zugegeben. Die Reaktion wird für 4 Stunden fortgesetzt. Dann werden 1283 Teile des Vernetzungsmittels II, 177 Teile Hexylglykol und 3 Gew.-% Bleioctoat (auf den Festkörper bezogen) untergemischt.

Inzwischen bereitet man ein Dispergierbad aus 1857 Teilen entionisiertem Wasser, 37,9 Teilen Eisessig und 51 Teilen einer Emulgatorlösung. In dieses Bad werden nun 2700 Teile der Harzlösung eingerührt. Nach einer Stunde fügt man weitere

1208 Teile entionisiertes Wasser und nach weiteren 20 Minuten 500 Teile entionisiertes Wasser zu. Anschliessend wird die Dispersion filtriert. Die Dispersion weist folgende Kenndaten auf:

| | |
|---|---|
| Festkörper | 31,9% |
| pH-Wert | 7,3 |
| MEQ-Säure | 0,532 |
| MEQ-Base | 0,619 |

Darstellung einer Pigmentpaste

146 g eines Umsetzungsproduktes aus einem Epoxidharz mit einem Epoxidäquivalentgewicht von 890 und Diethanolamin-Milchsäuresalz werden mit 199 g entionisiertem Wasser vorgelegt. Hierzu werden 200 g $TiO_2$, 48 g Extender auf Basis Aluminiumsilikat, 11 g Bleisilikat sowie 3 g Russ gegeben. Die Ausgangskomponenten werden in einem Mahlaggregat auf eine Hegman-Feinheit von 5-7 zerkleinert. Danach gibt man weitere 102 g entionisiertes Wasser zu, um die gewünschte Pastenkonsistenz zu erreichen. Die graue Pigmentpaste ist sehr lagerstabil.

Darstellung eines Vernetzungsmittels I

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet ist, wird mit 12 280 Teilen Toluylendiisocyanat (Mischung aus etwa 80% 2,4--Toluylendiisocyanat und etwa 20% 2,6-Toluylendiisocyanat) beschickt. Es wird Stickstoff eingeleitet und der Kühler wird eingeschaltet. Im Verlauf von 5 Stunden werden 5 550,5 Teile 2-Äthylhexanol allmählich zugegeben, wobei die Temperatur allmählich auf 50°C steigt. Während die Temperatur von 50°C aufrechterhalten wird, werden weitere 3 649,5 Teile 2-Ethylhexanol im Verlauf von 4 Stunden zugegeben. Die Reaktionsmischung wird 75 Minuten bei 50°C gehalten, dann wird der Kühler abgeschaltet und es werden 3,6 Teile Dibutylzinndilaurat zugegeben. Die Heizvorrichtung wird angeschaltet und die Reaktionsmischung wird im Verlauf von 45 Minuten auf 65,6°C erwärmt. Im Verlauf von zwei Stunden und 50 Minuten werden 3 184 Teile 1,1,1-Trimethylolpropan zugegeben, wobei die Temperatur von 65,6 auf 120°C steigt. Die Reaktionsmischung wird bei dieser Temperatur 90 Minuten gehalten, dann werden 10 560 Teile 2-Ethoxyethanol zugegeben. Das entstandene Produkt ist eine Lösung eines Polyurethanvernetzungsmittels.

Darstellung eines Vernetzungsmittels II

2 340 g Glycidylester der 2-Methyl-2-Ethylheptansäure werden mit 2 073 g Trimellithsäureanhydrid in einem Reaktionsgefäss auf 130°C erhitzt. Hierbei springt die stark exotherme Reaktion an. Durch externe Kühlung wird die Reaktion bei 150°C gehalten, bis eine Säurezahl von 183 erreicht ist. Danach kühlt man auf 900°C ab und setzt 1 450 g MIBK* zu. Anschliessend tropft man 385 g Propylenoxid langsam zu. Bei einer Säurezahl 2 wird die Reaktion abgebrochen. Der Festkörper der Harzlösung wird mit weiterem MIBK* auf 70% eingestellt.

* MIBK = Methylisobutylketon

Zubereitung des Elektrotauchbades I

2000 Teile entionisiertes Wasser und 25 Teile 10%ig Essigsäure werden vorgelegt. hierzu gibt man 1971 Teile der Bindemitteldispersion I. Die Mischung wird mit 775 Teilen der beschriebenen Pigmentpaste versetzt. Der Festkörper des Lackbades wird mit 229 Teilen entionisiertem Wasser eingestellt. Das Lackbad wird durch folgende Kennwerte charakterisiert:

| | |
|---|---|
| Festkörper | 19,3% |
| pH-Wert | 6,2 |
| MEQ-Säure | 0,4200 |
| MEQ-Base | 0,602 |

Die aus diesem Lackbad bei 25°C während 2 Minuten mit 250 V abgeschiedenen Filme werden während 20 Minuten bei 185°C eingebrannt. Die Schichtdicke der eingebrannten Filme liegt bei 33 µm. Der Umgriff nach BMW liegt bei 90%.

Zubereitung des Elektrotauchbades II

2000 Teile entionisiertes Wasser und 25 Teile 10%ige Essigsäure werden vorgelegt. hierzu gibt man 2144 Teile der Bindemitteldispersion II. Die Mischung wird mit 775 Teilen der im Beispiel beschriebenen Pigmentpaste versetzt. Der Festkörper des Lackbades wird mit 56 Teilen entionisiertem Wasser eingestellt. Das Lackbad weist folgende Kennwerte auf:

| | |
|---|---|
| Festkörper | 18,9% |
| pH-Wert | 6,5 |
| MEQ-Säure | 0,532 |
| MEQ-Base | 0,694 |

Die aus dem Lackbad bei 25°C während 20 minuten mit 200 V abgeschiedenen Filme werden während 20 Minuten bei 185°C eingebrannt. Die Schichtdicke liegt bei 38 µm. Die Filme weisen sehr gute Elastizitätswerte auf.

*Beispiel 3*

*Herstellung des Bindemittels III*

1013 Teile eines handelsüblichen Epoxidharzes auf der Basis von Bisphenol A (Epoxidäquivalentgewicht 188), 178 Teile Dimethylmalonsäure und 77 Teile Xylol werden in einem 4 l Reaktor vorgelegt und auf 133°C erhitzt. Bei 125°C setzt man in der Aufheizphase 2,3 Teile Dimethylbenzylamin zu. Man hält die Temperatur bei 133°C bis ein Epoxidäquivalentgewicht von 420 erreicht ist. Dann gibnt man 433 Teile Polytetramethylenglykol (OH-Zahl 174,5) und weitere 4 Teile Dimethylbenzylamin zu. Man setzt die Reaktion bei der angegebenen Temperatur fort, bis ein Epoxidäquivalentgewicht von 1150 erreicht ist. Dann werden 179 Teile des 70%igen Umsetzungsproduktes in Methylisobutylketon aus 2-Di-2-aminoethylaminoethanol und Methylisobutylketon und 249 Teile des 70%igen Umsetzungsproduktes in Methylisobutylketon aus Neopentanolamin und Methylisobutylketon zugefügt. Man hält den Reaktionsansatz für weitere 3 Stunden bei 133°C, setzt dann 165 Teile Propylenglykolmonophenylether zu und kühlt rasch auf 95°C ab. Dann fügt man 906 Teile des Vernetzungsmittels I zu und mischt es 30 Minuten unter.

Inzwischen wird aus 2120 Teilen entionisiertem Wasser, 38 Teilen Eisessig und 51 Teilen einer Emulgatorlösung ein Dispergierbad vorbereitet. Es weist eine Säurezahl von 16,9 auf. Die oben beschriebene Harzlösung wird darin dispergiert und eine Stunde nachgerührt. Dann fügt man weitere 2084 Teile entionisiertes Wasser zu und mischt sie 30 Minuten unter. Die Dispersion wird danach durch ein Plattenfilter filtriert. Der Festkörper der Dispersion liegt bei 34,5%.

Herstellung des Elektrotauchbades III

Nach folgendem Rezept wird der Elektrotauchlack mit der Bindemitteldispersion III hergestellt.

| | | |
|---|---|---|
| 2218 | Teile | entionisiertes Wasser |
| 25 | Teile | 10%ige Essigsäure |
| 1982 | Teile | Bindemitteldispersion |
| 775 | Teile | Pigmentpaste |

Aus diesem Lackbad werden auf phosphatiertem Stahlblech bei 25°C während 2 Minuten mit 230 V Lackfilme abgeschieden. Die Filme werden mit entionisiertem Wasser abgespült und im Umlufttrockenschrank bei 185°C während 2 Minuten eingebrannt. Die Schichtdicke der eingebrannten Filme liegt bei 31 µm.

**Patentansprüche**

1. Wasserdispergierbare Bindemittel für kationische Elektrotauchlacke auf der Basis von modifizierten Epoxidharzen, dadurch gekennzeichnet, dass die Bindemittel Reaktionsprodukte von

(A) niedermolekularen, aromatische Gruppen enthaltenden Epoxidharzen mit einem Epoxidäquivalentgewicht unter 375,

(B) aliphatischen und/oder alicyclischen polyfunktionellen Alkoholen und/oder Carbonsäuren mit einem Molekulargewicht unter 350, wobei das aus (A) und (B) erhaltene Zwischenprodukt einen Gehalt an aromatischen Gruppen, berechnet als Phenylengruppe, von 10 bis 45% enthält,

(C) polyfunktionellen Alkoholen, Carbonsäuren und/oder SH-Verbindungen mit einem Molekulargewicht von 500 - 5 000 und

(D) Aminoalkoholen mit mindestens einem verkappten primären oder einem tertiären Stickstoffatom sind.

2. Bindemittel nach Anspruch 1, dadurch gekennzeichnet, dass die Komponente A und Epoxidharz auf Basis Bisphenol A ist.

3. Bindemittel nach Anspruch 1, dadurch gekennzeichnet, dass die Komponente A ein Polyglycidylester ist.

4. Bindemittel nach Anspruch 1-3, dadurch gekennzeichnet, dass die Komponente B ein Diol oder eine Dicarbonsäure mit einer verzweigten aliphatischen Kette ist.

5. Bindemittel nach Anspruch 1-4, dadurch gekennzeichnet, dass die Komponente B ein Diol oder eine Dicarbonsäure mit mindestens einer Neostruktur ist.

6. Bindemittel nach Anspruch 1 bis 5, dadurch gekennzeichnet, dass das Molekulargewicht der Komponente C 530-3 000 beträgt.

7. Bindemittel nach Anspruch 1-6, dadurch gekennzeichnet, dass die Komponente C ein lineares Polyesterpolyol ist.

8. Bindemittel nach Anspruch 1-6, dadurch gekennzeichnet, dass die Komponente C ein lineares Polyesterpolyol ist.

9. Bindemittel nach Anspruch 1-6, dadurch gekennzeichnet, dass die Komponente C ein lineares Polyurethanpolyol, ein lineares Polyamid oder eine lineare Dicarbonsäure ist.

10. Bindemittel nach Anspruch 1-6, dadurch gekennzeichnet, dass die Komponente C ein Polythioetherpolythiol ist.

11. Bindemittel nach Anspruch 1-10, dadurch gekennzeichnet, dass der Anteil der Komponente C 10-50 Gew.-%, bezogen auf das gesamte Bindemittel, beträgt.

12. Bindemittel nach Anspruch 1-11, dadurch gekennzeichnet, dass sie mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt werden sind.

13. Verfahren zur Herstellung von wasserdispergierbaren Bindemitteln für kationische Elektrotauchlacke, dadurch gekennzeichnet, dass

(A) niedermolekulare, aromatische Gruppen enthaltende Epoxidharze mit einem Epoxidäquivalentgewicht unter 375 mit

(B) aliphatischen und/oder alicyclischen polyfunktionellen Alkoholen oder Carbonsäuren mit einem Molekulargewicht unter 350 unter Addition an die Epoxidgruppe derart umgesetzt werden, dass die Umsetzungsprodukte einen Anteil an aromatischen Gruppen, berechnet als Phenylengruppe, von 10-45% enthalten und diese Umsetzungsprodukte mit

(C) polyfunktionellen Alkoholen, Carbonsäuren und/oder SH-Verbindungen mit einem Molekulargewicht von 500-5 000 sowie zur Erzielung der erforderlichen Wasserdispergierbarkeit mit

(D) Aminoalkoholen weiter modifiziert werden, wobei der Aminoalkohol mindestens ein verkapptes primäres oder ein tertiäres Stickstoffatom enthält.

14. Verwendung der Bindemittel nach Anspruch 1 bis 12 für Elektrotauchbäder.

15. Verfahren zum elektrophoretischen Beschichten eines elektrisch leitenden als Kathode geschalteten Substrats aus einem wässrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, dadurch gekennzeichnet, dass die Bindemittel Reaktionsprodukte von

(A) niedermolekularen, aromatischen Gruppen enthaltenden Epoxidharzen mit einem Epoxidäquivalentgewicht unter 375,

(B) aliphatischen und/oder alicyclischen polyfunktionellen Alkoholen und/oder Carbonsäuren mit einem Molekulargewicht unter 350, wobei das aus (A) und (B) erhaltene Zwischenprodukt einen Gehalt an aromatischen Gruppen, berechnet als Phenylengruppe, von 10 bis 45% aufweist,

(C) polyfunktionellen Alkoholen, Carbonsäuren und/oder SH-Verbindungen mit einem Molekulargewicht von 500 bis 5 000 und

(D) Aminoalkoholen mit mindestens einem verkappten primären oder einem tertiären Stickstoffatom sind.

**Claims**

1. Water-dispersible binding agents for cationic electroimmersion varnishes on the basis of modified epoxy resins, characterized by the features that the binding agents are reaction products of

(A) low-molecular epoxy resins containing aromatic groups, with an equivalent epoxy weight of less than 375,

(B) aliphatic and/or alicyclic polyfunctional alcohols and/or carbonic acids with a molecular weight of less than 350, where the intermediate product obtained from (A) and (B) has a content of aromatic groups of 10 to 45%, calculated as a phenylene group,

(C) polyfunctional alcohols, carbonic acid and/or SH-compounds with a molecular weight of 500 to 5000 and

(D) amino alcohols with at least one concealed primary or a tertiery nitrogen atom.

2. Binding agent according to claim 1, characterized by the feature that component A is an epoxy resin of the bisphenol A type.

3. Binding agent according to claim 1, characterized by the feature that component A is a polyglycidyl ester.

4. Binding agent according to claims 1 to 3, characterized by the feature that the component B is a diol or a dicarbonic acid with a branched aliphatic chain.

5. Binding agent according to claim 1 to 4, characterized by the feature that component B is a diol or a dicarbonic acid with at least one neostructure.

6. Binding agent according to claims 1 to 5, characterized by the feature that the molecular weight of component C is 530 to 3000.

7. Binding agent according to claims 1 to 6, characterized by the feature that component C is a linear polyesterpolyol.

8. Binding agent according to claims 1 to 6, characterized by the feature that component C is a linear polyetherpolyol.

9. Binding agent according to claims 1 to 6, characterized by the feature that component C is a linear polyurethanepolyol, a linear polyamide or a linear dicarbonic acid.

10. Binding agent according to claims 1 to 6, characterized by the feature that component C is a polythioetherpolythiol.

11. Binding agent according to claims 1 to 10, characteriezed by the feature that the component C content is 10 to 50% by weight, referred to the entire binding agent.

12. Binding agent according to claims 1 to 11, characterized by the feature that they have been reacted with a partially blocked polyisocyanate which, in the average, has one free isocyanate group per molecule and the blocked isocyanate groups of which are stable at room temperature.

13. Method for the preparation of water-dispersible binding agents for cationic electro-immersion varnishes, characterized by the features that

(A) low-molecular epoxy resins containing aromatic groups with an equivalent epoxy weight of less than 375 are reacted with

(B) aliphatic and/or alicyclic polyfunctional alcohols or carbonic acids with a molecular weight of less than 350 are reacted, with addition to the epoxy group, in such a manner that the reaction products have a content of aromatic groups of 10 to 45%, calculated as a phenylene group, and these reaction products are further modified with

(C) polyfunctional alcohols, carbonic acids and/or SH-compounds with a molecular weight of 500 to 5000 as well as, for obtaining the required water dispersibility, with

(D) amino alcohols, where the amino alcohol contains at least one concealed primary or a tertiary nitrogene atom.

14. Use of the binding agents according to claims 1 to 12 for electro-immersion baths.

15. Method for the electrophoretic coating of an electrically conduction substrate, connected as a cathode, from an aqueous bath on the basis of a cationic binding agent which is at least partially neutralized with acids, where the binding agents have been made self-cross-linking by a reaction, or the bath contains an additional cross-linking agent, characterized by the feature that the binding agents are reaction products of

(A) low-molecular epoxy resins containing aromatic groups, with an equivalent epoxy weight of less than 375,

(B) aliphatic and/or alicyclic polyfunctional alcohols and/or carbonic acids with a moleculat weight of less than 350, where the intermediate product obtained from (A) and (B) has a content of aromatic groups of 10 to 45%, calculated as a phenylene group,

(C) polyfunctional alcohols, carbonic acids and/or SH-compounds with a molecular weight of 500 to 5000 and

(D) amino alcohols with at least one concealed primary or a tertiary nitrogene atom.

**Revendications**

1. Liants susceptibles d'être dispersés dans l'eau, pour laques électrophorétiques cationiques, à base de résines époxyde modofiées, caractérisés par le fait que les liants sont les produits de réaction

(A) de résines époxyde qui renferment des groupes aromatiques, à bas poids moléculaire, et dont le poids équivalent en époxyde est inférieur à 375,

(B) d'alcools et/ou d'acides carboxyliques polyfonctionnels aliphatiques et/ou alicycliques, de poids moléculaire inférieur à 350, le produit intermédiaire obtenu à partir de (A) et de (B) renfermant une teneur en groupes aromatiques, calculée en groupes phénylène, de 10 à 45%,

(C) d'alcools, d'acides carboxyliques et/ou de composés -SH polyfunctionnels, de poids moléculaire compris entre 500 et 5 000 et

(D) d'aminoalcools renfermant au moins un atome d'azote primaire coiffé ou un atome d'azote tertiaire.

2. Liants selon la revendication 1, caractérisés par le fait que le composant A est une résine époxyde à base de Bisphénol A.

3. Liants selon la revendication 1, caractérisés par le fait que le composant A est un polyglycidylester.

4. Liants selon l'une des recendications 1 à 3, caractérisés par le fait que le composant B est un diol ou un acide dicarboxylique à chaîne aliphatique ramifiée.

5. Liants selon l'une des revendications 1 à 4, caractérisés par le fait que le composant B est un diol ou un acide dicarboxylique avec au moins une structure néo.

6. Liants selon l'une des revendications 1 à 5, caractérisés par le fait que le poids moléculaire du composant C s'élève à 530-3 000.

7. Liants selon l'une des revendications 1 à 6, caractérisés par le fait que le composant C est un polyesterpolyol linéaire.

8. Liants selon l'une des revendications 1 à 6, caractérisés par le fait que le composant C est un polyétherpolyol linéaire.

9. Liants selon l'une des revendications 1 à 6, caractérisés par le fait que le composant C est un polyuréthannepolyol linéaire, un polyamide linéaire ou un acide dicarboxylique linéaire.

10. Liants selon l'une des revendications 1 à 6, caractérisés par le fait que le composant C est un polythioétherpolythiol.

11. Liants selon l'une des revendications 1 à 10, caractérisés par le fait que la fraction du composant C s'élève à 10-50% en poids par rapport à la totalité du liant.

12. Liants selon l'une des revendications 1 à 11, caractérisés par le fait qu'on les a fait réagir avec un polyisocyanate partiellement bloqué, qui possède en moyenne un groupe isocyanate libre par molécule et dont les groupes isocyanate bloqués sont stables à la température ambiante.

13. Procédé de préparation de liants susceptibles d'être dispersés dans l'eau pour laques électrophorétiques cationiques, caractérisé par le fait que l'on fait réagir

(A) des résines époxyde qui renferment des groupes aromatiques, à bas poids moléculaire, et dont le poids équivalent en époxyde est inférieur à 375 avec

(B) des alcools ou acides carboxyliques polyfunctionnels aliphatiques et/ou alicycliques, de poids moléculaire inférieur à 350, avec addition sur le groupe époxyde de telle sorte que les produits de réaction renferment une fraction en groupes aromatiques, calculée en groupes phénylène, de 10 à 45%, et que l'on modifie encore ces produits de réaction avec

(C) des alcools, des acides carboxyliques et/ou des composés -SH polyfonctionnels, de poids moléculaire compris entre 500 et 5 000, ainsi que pour obtenir la dispersibilité dans l'eau nécessaire, avec

(D) des aminoalcools, l'aminoalcool renfermant au moins un atome d'azote primaire coiffé ou un atome d'azote tertiaire.

14. Utilisation du liant selon l'une des revendications 1 à 12 pour bains d'électrodéposition.

15. Procédé pour le revêtement électrophorétique d'un substrat électriquement conducteur, monté en cathode, à partir d'un bain aqueux à base de liants cationiques au moins partiellement neutralisés par des acides, les liants ayant été rendus auto-réticulants par transformation ou le bain renfermant un agent de réticulation additionnel, caractérisé par le fait que les liants sont les produits de réaction

(A) de résines époxydes qui renferment des groupes aromatiques, à bas poids moléculaire, et dont le poids équivalent en époxyde est inférieur à 375,

(B) des alcools et/ou des acides carboxyliques polyfonctionnels aliphatiques et/ou alicycliques, de poids moléculaire inférieur à 350, le produit intermédiaire obtenu à partir de (A) et de (B) renfermant une teneur en groupes aromatiques, calculée en groupes phénylène, de 10 à 45%,

(C) d'alcools, d'acides carboxyliques et/ou de composés -SH polyfonctionnels de poids moléculaire compris entre 500 et 5 000, et

(D) d'aminoalcools renfermant au moins un atome d'azote primaire coiffé ou un atome d'azote tertiaire.